# FASCICULE DE BREVET EUROPEEN

(11) **EP 0 345 173 B1**
(45) Date de publication et mention de la délivrance du brevet: **07.01.1993**
(21) Numéro de dépôt: 89420184.7
(22) Date de dépôt: 29.05.1989
(51) Int. Cl.: B65D 41/34, B29C 45/44, B29C 45/26

(54) **Dispositif de bouchage comprenant un bouchon et une bague d'inviolabilité, et procédé pour sa fabrication**
Verschlussvorrichtung, bestehend aus einer Kappe und einem Originalitätsring, und Verfahren zu ihrer Herstellung
Closure device comprising a cap and an antitamper ring, and process for manufacturing same

(30) Priorité: 30.05.1988 FR 8807578
(43) Date de publication de la demande: 06.12.1989
(73) Titulaire: ASTRA PLASTIQUE Société Anonyme de droit français, 69830 Saint Georges de Reneins (FR)
(72) Inventeur: Odet, Philippe, F-69380 Chasselay (FR)
(74) Mandataire: Maureau, Philippe

(56) Documents cités:
- EP-A- 0 261 965
- FR-A- 2 290 364
- US-A- 2 799 049
- US-A- 3 091 810

## Description

La présente invention a pour objet un dispositif de bouchage comprenant un bouchon et une bague d'inviolabilité, et un procédé pour sa fabrication.

Il est fréquent d'équiper les bouchons de bagues d'inviolabilité permettant de garantir le consommateur vis-à-vis de toute ouverture du récipient avant achat de celui-ci.

Le plus souvent, la bague d'inviolabilité vient de moulage avec le bouchon et est disposée dans le prolongement de la jupe de celui-ci, à laquelle il est relié par une zone de moindre résistance. Lors de la mise en place du bouchon sur le col du récipient, la bague vient prendre appui derrière un épaulement ménagé sur celui-ci. Lors du dévissage du bouchon correspondant à un déplacement axial de celui-ci, la bague qui est bloquée en translation par appui sur l'épaulement se désolidarise du bouchon, ce qui permet de visualiser ultérieurement la première ouverture du récipient.

Cette technique ne donne cependant pas totalement satisfaction. En effet, la bague et le bouchon étant réalisés dans le même matériau, il convient, au niveau du choix de celui-ci, de trouver un compromis entre l'étanchéité requise, une rigidité suffisante de la bague pour assurer un bon appui contre l'épaulement du col de la bouteille, une tenue suffisante de la bague sur le bouchon pour éviter les risques de désolidarisation lors des manipulations avant bouchage et une capacité suffisante de rupture des zones de liaison entre le bouchon et la bague. En pratique, il est impossible de remplir de façon parfaitement satisfaisante ces différents critères. En outre, la bague d'inviolabilité est de la même couleur que le bouchon, ce qui empêche toute possibilité de décoration ou d'identification du produit conditionné par une bague de couleur différente de celle du bouchon.

Le brevet français FR-A-2 290 364 au nom de la Demanderesse décrit un bouchon en matière synthétique équipé d'une bague d'inviolabilité rapportée, fixée par encliquetage à l'intérieur de la jupe du bouchon, et comportant deux parties décalées axialement, dont la première est engagée dans une gorge du bouchon et dont la seconde, reliée à la première par une zone de moindre résistance, est destinée à venir prendre appui derrière un épaulement ménagé sur le col du récipient à équiper.

Il est indiqué dans ce brevet que le bouchon est avantageusement réalisé en une matière synthétique rigide, telle que du polyéthylène haute densité, et que la bague est réalisée en une matière souple, telle que du polyéthylène basse densité, susceptible d'être facilement déchirée.

Il est apparu que pour assurer une excellente étanchéité, indispensable pour le conditionnement de nombreux produits, tels que des produits pharmaceutiques, il était opportun de rapporter à l'intérieur du bouchon un obturateur en matière synthétique souple. Il en résulte un prix de revient élevé puisque le dispositif de bouchage comprend trois pièces, et que la réalisation du corps du bouchon nécessite la mise en oeuvre d'un moule à noyau éclipsable, qui est d'un coût important et n'assure que des cadences de fabrication réduites.

Un tel type de bouchage ne peut donc être mis en oeuvre que pour des produits chers, et non pour des produits de consommation courante tels que des eaux minérales ou autres boissons.

La présente invention vise à remédier à ces inconvénients.

A cet effet, le dispositif de bouchage qu'elle concerne, du type comprenant d'une part un bouchon en matière synthétique comportant un fond destiné à assurer la fermeture avec étanchéité de l'orifice d'un récipient et une jupe équipée de moyens de fixation sur le col du récipient et d'autre part, une bague d'inviolabilité rapportée sur le bouchon, fixée par encliquetage à l'intérieur de la jupe de celui-ci, comportant deux parties décalées axialement, dont la première est engagée dans une gorge du bouchon et dont la seconde, reliée à la première par une zone de moindre résistance, est destinée à venir prendre appui derrière un épaulement ménagé sur le col du récipient à équiper, est caractérisé en ce que la matière constitutive du bouchon est plus souple que la matière constitutive de la bague et en ce que la gorge du bouchon dans laquelle est engagée la bague est délimitée, du côté de l'extrémité libre de la jupe du bouchon, par une pluralité de crans disposés selon une même ligne circulaire et séparés les uns des autres par des zones lisses.

C'est ainsi par exemple que le bouchon est réalisé en polyéthylène basse densité, tandis que la bague est réalisée en polyéthylène haute densité.

L'utilisation d'un matériau relativement souple pour réaliser le bouchon permet de réaliser une excellente étanchéité sans montage d'un obturateur complémentaire. La Demanderesse a établi que, de façon surprenante, il était possible d'associer, à un bouchon réalisé en un matériau relativement souple, une bague réalisée en un matériau plus dur, qui possède une bonne tenue sur le bouchon et dont les deux parties sont séparables facilement l'une de l'autre lors de la première ouverture du récipient.

Le ménagement de crans de retenue de la bague à l'intérieur du bouchon permet d'une part de simplifier l'opération de démoulage du bouchon et d'autre part, de faciliter l'opération de montage de la bague dans le bouchon, tout en assurant une retenue suffisante de la bague dans le bouchon.

Selon un mode de mise en oeuvre, dans le cas d'un bouchon vissé, le procédé de fabrication de ce bouchon, utilisant un moule à dévissage dont la partie correspondant à l'intérieur de celui-ci comprend disposés concentriquement et de l'intérieur vers l'extérieur, un noyau central, un noyau tournant assurant la formation du filet du bouchon, une bague intermédiaire dont l'extrémité avant comporte des pions de blocage en rotation du bouchon, et une plaque dévêtisseuse délimitant le bord correspondant à l'extrémité libre de la jupe, consiste, après injection de matière, à réaliser l'ouverture du moule par déplacement de la partie de celui-ci assurant la formation de l'extérieur du bouchon, à déplacer le noyau central dans un sens de retrait, à réaliser le retrait du noyau tournant par dévissage de celui-ci, la bague intermédiaire assurant, au cours de ce mouvement, le blocage en rotation du bouchon, puis à dégager le bouchon vis-à-vis de la bague intermédiaire par déplacement de la plaque dévêtisseuse.

Cette technique est intéressante, car permettant d'obtenir par une technique simple et avec de hautes cadences de fabrication un bouchon dont les cotes présentent une excellente précision, et dont le matériau dans lequel il est réalisé permet d'obtenir de bonnes qualités d'étanchéité. En outre, la bague étant réalisée indépendamment peut être d'une couleur différente de celle du bouchon, permettant soit l'identification du produit contenu dans le récipient, soit simplement de décorer harmonieusement le récipient.

Compte tenu du prix de revient modéré de ce dispositif de bouchage, celui-ci peut être appliqué à des récipients contenant des produits de grande consommation tel qu'eau minérale ou autres boissons.

De toute façon l'invention sera bien comprise à l'aide de la description qui suit, en référence au dessin schématique annexé représentant, à titre d'exemple non limitatif une forme d'exécution de ce dispositif de bouchage :

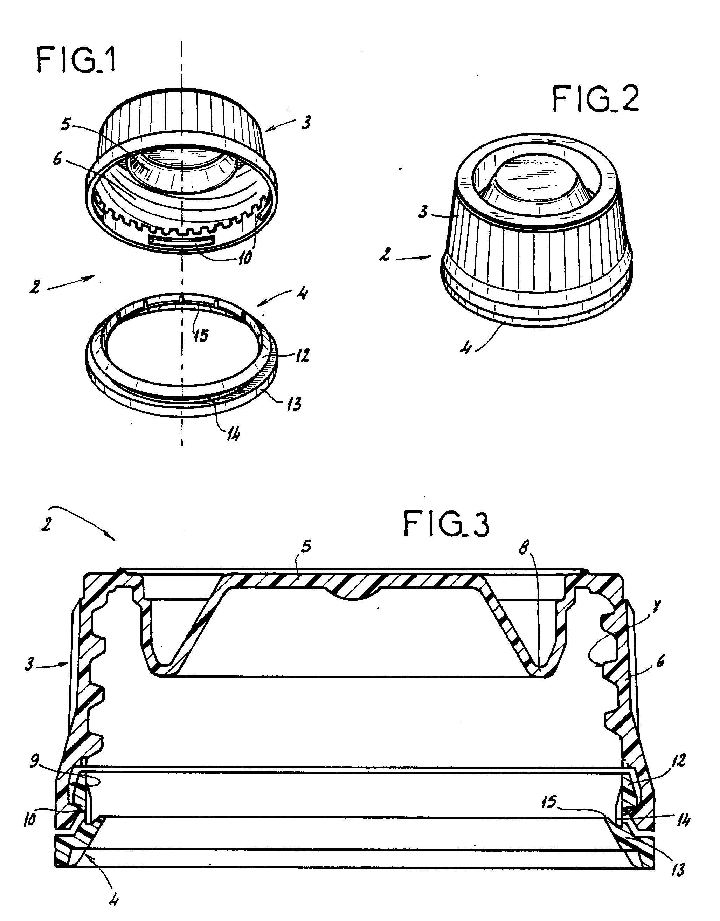

Figure 1 est une vue en perspective éclatée d'un bouchon et de la bague d'inviolabilité qui lui est associée ;
Figure 2 est une vue en perspective d'un bouchon et de sa bague d'inviolabilité en position montée ;
Figure 3 est une vue en coupe longitudinale d'un bouchon et de sa bague d'inviolabilité en position montée ;
Figure 4 est une vue en coupe longitudinale du bouchon de figure 3 à l'intérieur de son moule.

Le dispositif de bouchage représenté au dessin et désigné par la référence générale 2 comprend, d'une part un bouchon 3, et d'autre part, une bague d'inviolabilité 4. Le bouchon 3 possède un fond 5 raccordé à une jupe 6 possédant un filet 7 par une zone annulaire en creux 8. A proximité de l'extrémité inférieure de la jupe 6, est ménagée une gorge 9 dont le bord inférieur est délimité par une pluralité de crans 10 disposés selon une même ligne circulaire et séparés les uns des autres par des zones lisses. Ce bouchon est réalisé en une matière synthétique relativement souple tel qu'un polyéthylène basse densité.

La bague d'inviolabilité 4 comprend deux parties 12 et 13 décalées axialement et reliées l'une à l'autre par une zone 14 de moindre résistance, la partie 12 de la bague étant destinée à venir se fixer par encliquetage irréversible à l'intérieur de la gorge 9 du bouchon, tandis que la partie 13 de la bague comprend une lèvre 15 faisant saillie vers l'intérieur, destinée à venir prendre appui derrière un épaulement ménagé sur le col du récipient à obturer par ce dispositif de bouchage.

La bague d'inviolabilité 4 est pour sa part réalisée en une matière synthétique plus dure que celle constitutive du bouchon, telle que du polyéthylène haute densité.

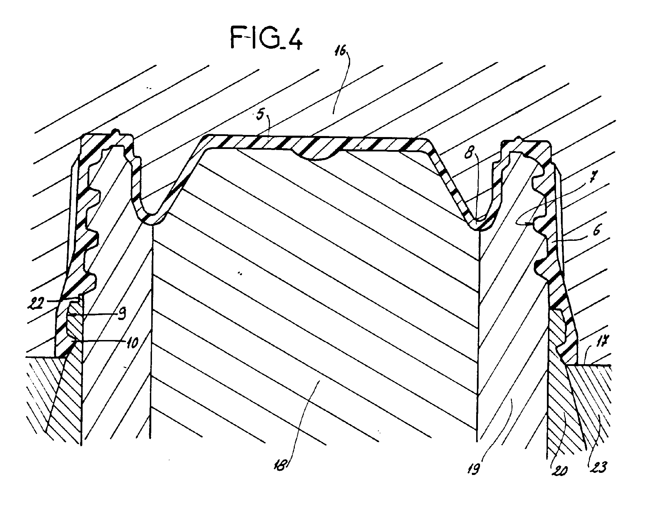

Comme montré à la figure 4, le bouchon 3 est obtenu à l'intérieur d'un moule comprenant une partie extérieure 16 assurant la formation de la face extérieure du bouchon jusqu'au niveau du plan de joint 17. Du côté de l'intérieur du bouchon sont disposés concentriquement et de l'intérieur vers l'extérieur, un noyau central 18, un noyau tournant 19 destiné à assurer la formation du filet 7, une bague intermédiaire 20 dont l'extrémité avant comporte des pions 22 pour l'immobilisation en rotation du bouchon et une plaque dévêtisseuse 23 assurant la formation du bord de la jupe au niveau du plan de joint 17.

En pratique, après injection de matière dans le moule fermé, il est procédé tout d'abord à l'ouverture de celui-ci par déplacement de la partie 16.

Il est ensuite procédé au retrait du noyau central 18, puis au retrait du noyau tournant 19 par dévissage, le bouchon étant immobilisé en rotation au cours de ce mouvement par l'intermédiaire des pions 22.

Le dégagement du bouchon vis-à-vis de la bague intermédiaire 20 est réalisé par déplacement, en direction du fond du bouchon, de la plaque dévêtisseuse 23, ce dégagement étant facilité par le fait que les crans 10 délimitant la gorge 9 ne sont ménagés sur la totalité de la périphérie du bouchon.

Comme il ressort de ce qui précède, l'invention apporte une grande amélioration à la technique existante, en fournissant un dispositif de bouchage dans laquel la bague et le bouchon sont réalisés dans deux matériaux différents tout en permettant d'obtenir une excellente étanchéité du bouchage, avec un prix de revient raisonnable.

Comme il va de soi, l'invention ne se limite pas à la seule forme d'exécution de ce bouchon décrite ci-dessus à titre d'exemple, elle en embrasse au contraire, toutes les variantes de réalisation.

C'est ainsi, notamment, que la forme du fond du bouchon assurant l'étanchéité pourrait être différente, ou encore que la partie extérieure du moule pourrait être réalisée en un nombre différent d'éléments, sans que l'on sorte pour autant du cadre de l'invention.

## Revendications

1. Dispositif de bouchage du type comprenant d'une part un bouchon (3) en matière synthétique comportant un fond destiné à assurer la fermeture avec étanchéité de l'orifice d'un récipient et une jupe (6) équipée de moyens (7) de fixation sur le col du récipient et d'autre part, une bague d'inviolabilité (4) rapportée sur le bouchon, fixée par encliquetage à l'intérieur de la jupe de celui-ci, comportant deux parties décalées axialement, dont la première (12) est engagée dans une gorge du bouchon et dont la seconde (13), reliée à la première par une zone de moindre résistance, est destinée à venir prendre appui derrière un épaulement ménagé sur le col du récipient à équiper, le bouchon (3) et la bague (4) étant réalisés en des matières synthétiques différentes, caractérisé en ce que la matière constitutive du bouchon (3) est plus souple que la matière constitutive de la bague (4), et en ce que la gorge (9) du bouchon dans laquelle est engagée la bague est délimitée, du côté de l'extrémité libre de la jupe du bouchon, par une pluralité de crans (10) disposés selon une même ligne circulaire et séparés les uns des autres par des zones lisses.

2. Procédé de fabrication d'un bouchon vissé selon la revendication 1, caractérisé en ce qu'il utilise un moule à dévissage dont la partie correspondant à l'intérieur de celui-ci comprend, disposés concentriquement et de l'intérieur vers l'extérieur, un noyau central (18), un noyau tournant (19) assurant la formation du filet du bouchon, une bague intermédiaire (20) dont l'extrémité avant comporte des pions (22) de blocage en rotation du bouchon, et une plaque dévêtisseuse (23) délimitant le bord correspondant à l'extrémité libre de la jupe, ce procédé consistant, après injection de matière, à réaliser l'ouverture du moule par déplacement de la partie (16) du moule qui assure la formation de l'extérieur du bouchon, à déplacer le noyau central (18) dans un sens de retrait, à réaliser le retrait du noyau tournant (19) par dévissage de celui-ci, la bague intermédiaire (20) assurant, au cours de ce mouvement, le blocage en rotation du bouchon, puis à dégager le bouchon vis-à-vis de la bague intermédiaire par déplacement de la plaque dévêtisseuse (23).

## Patentansprüche

1. Verschlußvorrichtung von der Art, welche umfaßt:
einerseits eine Verschlußkappe (3) aus Kunststoff mit einer Deckfläche zum dichten Verschließen der Öffnung eines Behälters und einem Mantel (6), welcher Mittel zur Befestigung an dem Hals des Behälters aufweist, und
andererseits einen mit der Verschlußkappe verbundenen Versiegelungsring (4), der durch Eingreifen in das Innere des Mantels der Verschlußkappe befestigt ist, und zwei in Achsrichtung beabstandete Teile umfaßt, von denen das erste (12) mit einer Auskehlung der Verschlußkappe in Eingriff steht, und von denen das zweite (13) mit dem ersten durch einen Bereich geringerer Festigkeit verbunden ist, und dazu bestimmt ist, hinter einem am Hals des Behälters vorzusehenden besatz zum Anliegen zu kommen,
wobei die Verschlußkappe (3) und der Ring (4) aus unterschiedlichen Kunststoffen hergestellt sind,
**dadurch gekennzeichnet**, **daß**
das Material der Verschlußkappe (3) flexibler ist als das Material des Rings (4), und daß
die Auskehlung (9) der Verschlußkappe, mit welcher der Ring in Eingriff steht, an der Seite des freien Endes des Mantels der Verschlußkappe von einer Mehrzahl auf einer Kreislinie angeordneter, voneinander durch glatte Bereiche getrennter Einschnitte begrenzt ist.

2. Verfahren zur Herstellung eines Schraubverschlusses nach Anspruch 1,
**dadurch gekennzeichnet, daß**
eine Abschraubform benutzt wird, deren dem Inneren des Verschlusses entsprechender Teil, von innen nach außen konzentrisch angeordnet, umfaßt
einen zentralen Formkern (18),
einen die Ausbildung des Verschlußgewindes bewirkenden drehbaren Formkern (19),
einen Zwischenring (20), dessen vorderes Ende Blokkierstücke (22) zum Blockieren der Drehung des Verschlusses aufweist, und
eine Abstreifplatte (23), welche den dem freien Ende des Mantels entsprechenden Rand begrenzt,
wobei das Verfahren darin besteht, nach Injizieren des Materials das Öffnen der Form durchzuführen durch Verschieben des die Ausformung des Verschlußäußeren bewirkenden Teils (16) der Form,
Verschieben des zentralen Formkerns (18) in Herausnehmrichtung,
Herausnehmen des drehbaren Formkerns (19) durch beschrauben desselben, wobei während dieser Bewegung der Zwischenring (20) das Blockieren der Drehung des Verschlusses bewirkt, und danach durch
A betrennen des Verschlusses vom Zwischenring durch Verlaggern der Abstreifplatte (23).

## Claims

1. A closure device of the type including on the one hand a cap (3) of synthetic material having a base intended to ensure the sealed closure of the orifice of a container and a skirt (6) equipped with means (7) for fixing on the neck of the container and, on the other hand, an anti-tamper ring (4) connected to the cap, fixed by ratcheting within the skirt thereof, having two axially offset portions, the first (12) of which is engaged in a groove of the cap and the second (13) of which, joined to the first by a zone of less resistance, is intended to come to bear behind a shoulder formed on the neck of the container with which it is to be used, the cap (3) and the ring (4) being made of different synthetic materials, characterised in that the constituent material of the cap (3) is more flexible than the constituent material of the ring (4), and in that the groove (9) of the cap in which the ring is engaged is delimited, at its side nearest the free end of the skirt of the cap, by a plurality of notches (10) disposed on the same circular line and separated from one another by smooth areas.

2. A method of manufacturing a screw cap according to Claim 1, characterised in that it uses an unscrewing mould of which the portion corresponding to the interior thereof includes, disposed concentrically and from the interior towards the exterior, a central core (18), a rotatable core (19) ensuring the formation of the cap thread, an intermediate ring (20) of which the forward end has parts (22) for rotationally locking the cap, and a mould-opening plate (23) delimiting the edge corresponding to the free end of the skirt, this method consisting, after injecting the material, in forming the opening of the mould by moving the portion (16) of the mould which ensures the formation of the exterior of the cap, in moving the central core (18) in the withdrawal direction, in effecting the withdrawal of the rotatable core (19) by unscrewing it, the intermediate ring (20) ensuring, during this movement, the rotational locking of the cap, then in disengaging the cap with respect to the intermediate ring by moving the mould-opening plate (23).
